# FASCICULE DE BREVET EUROPEEN

(11) **EP 3 119 155 B1**
(45) Date de publication et mention de la délivrance du brevet: **07.11.2018**
(21) Numéro de dépôt: 16179003.5
(22) Date de dépôt: 12.07.2016
(51) Int. Cl.: H04W 74/08, H04L 5/00

(54) **PROCÉDÉ ET SYSTÈME D'ACCÈS MULTIPLE AVEC MULTIPLEXAGE FRÉQUENTIEL ADAPTATIF DE REQUÊTES D'AUTORISATION D'ENVOI DE DONNÉES**
MEHRFACHZUGANGSVERFAHREN UND -SYSTEM MIT FREQUENZIELLEM ADAPTIVEM MULTIPLEXEN DER AUTHORISIERUNGSANFRAGEN ZUR DATENÜBERTRAGUNG
MULTIPLE ACCESS METHOD AND SYSTEM WITH ADAPTIVE FREQUENCY MULTIPLEXING OF AUTHORISATION REQUESTS FOR SENDING DATA

(30) Priorité: 17.07.2015 FR 1556794
(43) Date de publication de la demande: 18.01.2017
(73) Titulaire: Commissariat à l'énergie atomique et aux énergies alternatives, 75015 Paris (FR)
(72) Inventeur: MAWLAWI, Baher, 38000 GRENOBLE (FR); DORE, Jean-Baptiste, 38950 SAINT MARTIN LE VINOUX (FR)
(74) Mandataire: Brevalex

(56) Documents cités:
- FR-A1- 3 008 266
- FR-A1- 3 012 931
- MAWLAWI BAHER ET AL: "CSMA/CA with RTS-CTS overhead reduction for M2M communication", 2015 IEEE WIRELESS COMMUNICATIONS AND NETWORKING CONFERENCE WORKSHOPS (WCNCW), IEEE, 9 mars 2015 (2015-03-09), pages 119-124, XP032786304, DOI: 10.1109/WCNCW.2015.7122540

## Description

### DOMAINE TECHNIQUE

Le domaine de l'invention est celui de l'accès multiple à une bande de fréquence d'un réseau de communication avec écoute de porteuse et évitement de collision.

### ÉTAT DE LA TECHNIQUE ANTÉRIEURE

L'écoute de porteuse et l'évitement de collision connu sous l'acronyme CSMA/CA (« Carrier Sense Multiple Access / Collision Avoidance») est un protocole d'accès multiple qui peut être utilisé dans les systèmes de radiocommunications pour gérer l'allocation de la ressource radio.

Ce protocole est utilisé pour éviter des collisions entre de multiples utilisateurs (noeuds sources) souhaitant accéder en même temps à un point d'accès commun (noeud destinataire) sur la liaison montante.

Dans une mise en oeuvre de ce protocole, un noeud source souhaitant émettre des données écoute le canal de communication. Si le canal est occupé, une durée (exprimée en nombre de tranches horaires) d'un compteur d'attente (connu sous le nom de « backoff counter ») est choisie de manière aléatoire dans un intervalle [0, CW-1], où CW représente une fenêtre de contention. Le compteur d'attente est décrémenté de 1 à chaque fois que le canal est détecté comme étant disponible sur une durée DIFS (« Distributed Inter-Frame Space »). Le compteur d'attente est arrêté lorsque le canal est occupé, et reprend lorsque le canal est de nouveau disponible sur la durée DIFS au moins.

Lorsque le compteur d'attente atteint zéro, le noeud source transmet un message de requête d'autorisation d'envoi de données RTS (« Request To Send ») au noeud destinataire, et attend de recevoir un message d'autorisation d'envoi de données CTS (« Clear To Send ») du noeud destinataire avant d'émettre les données. A réception de toutes les données émises, et immédiatement après expiration d'une durée SIFS (« Short Inter-Frame Space»), le noeud destinataire envoie un message d'acquittement ACK (pour « ACKnowledgment »).

La fenêtre de contention CW est un entier compris dans un intervalle [CWₘᵢₙ, CW_{max]}. Cette fenêtre CW est initialement fixée à la valeur minimale CWₘᵢₙ. Chaque fois qu'un noeud source est impliqué dans une collision, il augmente son temps d'attente en doublant la fenêtre CW, jusqu'à la valeur maximale CWₘₐₓ. A contrario, en cas de succès d'une transmission, le noeud source réduit la fenêtre CW à sa valeur minimale CWₘᵢₙ.

Un système CSMA/CA en fonctionnement mono-canal conventionnel présente l'avantage de ne nécessiter ni signalisation pour la requête de bande passante, ni allocation selon un accès planifié. En revanche, son efficacité est assez faible dans la mesure où ses performances se dégradent rapidement lorsque le nombre de noeuds sources augmente.

Cette limitation peut être surmontée en ayant recours à un accès multiple par répartition sur différentes sous-bandes selon lequel plusieurs noeuds sources peuvent transmettre simultanément sur différentes sous-bandes, les noeuds sources connaissant l'état de disponibilité de chacune des sous-bandes à chaque instant. Cet accès multiple par répartition sur différentes sous-bandes exploite par exemple la méthode d'accès OFDMA (« Orthogonal Frequency Division Multiple Access ») selon laquelle la ressource spectrale (bande de fréquence) est divisée en un ensemble de sous-porteuses orthogonales. Cet ensemble de sous-porteuses est lui-même divisé en sous-ensembles, chaque sous-ensemble de sous-porteuses constituant une sous-bande. Les noeuds sources s'affrontent ainsi pour l'accès à la ressource à la fois dans le temps et en fréquence.

Il a ainsi été proposé de diviser une bande de fréquence d'un canal de communication en un ensemble de sous-bandes de requête d'envoi dédiées à la transmission, par des noeuds source vers un noeud destinataire, de messages RTS de requête d'autorisation d'envoi de données sur la bande de fréquence. Le noeud destinataire écoute chacune des sous-bandes indépendamment, et s'il détecte un ou plusieurs messages RTS, il envoie un message CTS d'autorisation d'envoi de données à un noeud source sélectionné, aléatoirement ou non, parmi le ou les noeuds sources ayant transmis le ou les messages RTS détectés par le noeud destinataire. Le noeud source sélectionné transmet ses données puis attend de recevoir le message d'acquittement ACK. Le message CTS, les données et le message ACK sont transmis sur l'intégralité du canal de communication, à savoir sur l'ensemble des sous-bandes.

On pourra par exemple se référer à la demande de brevet EP 2 822 231 A1 qui propose que chaque noeud source vienne transmettre un message RTS sur une ou plusieurs des sous-bandes de requête d'envoi formant un sous-ensemble dudit ensemble de sous-bandes de requêtes d'envoi.

On pourra également se référer à la demande de brevet EP 2871903 A1 qui propose que chaque noeud source vienne transmettre plusieurs messages RTS, chacun sur une des sous-bandes de requête d'envoi, de manière à accroitre la probabilité qu'un message RTS atteigne le noeud destinataire et soit correctement décodé. En effet, une collision n'intervient que si chacun des messages RTS transmis par un noeud source est impliqué dans une collision sur la sous-bande de requête d'envoi sur lequel il est transmis. Il est par ailleurs prévu que le nombre de messages RTS transmis par un noeud source puisse être modifié dynamiquement en fonction de la charge du canal de communication, ce qui se traduit par des meilleures performances globales.

### EXPOSÉ DE L'INVENTION

L'invention a pour objectif de fournir une technique permettant d'améliorer les capacités de transmission d'un système CSMA/CA exploitant de multi sous-bandes de requête d'envoi. L'invention est définie par les revendications en annexe.

Certains aspects préférés mais non limitatifs de ce procédé sont les suivants :
- si le débit binaire pendant la première fenêtre temporelle est supérieur au débit binaire pendant la seconde fenêtre temporelle, la modification du découpage de la bande de fréquence consiste à modifier le nombre de sous-bandes de requête d'envoi du deuxième nombre vers ledit premier nombre, et le procédé comprend en outre les étapes consistant à élargir la première fenêtre temporelle et à mettre en oeuvre l'accès multiple à la bande de fréquence découpée en ledit premier nombre de sous-bandes de requête d'envoi pendant la première fenêtre temporelle élargie ;
- il comprend à l'issue de la première fenêtre temporelle élargie :
   ∘ une évaluation du débit binaire des données envoyées sur la bande de fréquence pendant la première fenêtre temporelle élargie ;
   ∘ une modification du découpage de la bande de fréquence, la mise en oeuvre de l'accès multiple à la bande de fréquence découpée en ledit deuxième nombre de sous-bandes de requête d'envoi pendant une nouvelle deuxième fenêtre temporelle, et une évaluation du débit binaire des données envoyées sur la bande de fréquence pendant la nouvelle deuxième fenêtre temporelle ;
   ∘ une comparaison du débit binaire pendant la première fenêtre temporelle élargie au débit binaire pendant la nouvelle deuxième fenêtre temporelle.
- si le débit binaire pendant la première fenêtre temporelle élargie est supérieur au débit binaire pendant la nouvelle seconde fenêtre temporelle, la bande de fréquence est redécoupée en ledit premier nombre de sous-bandes de requête d'envoi, et le procédé comprend en outre les étapes consistant à élargir à nouveau la première fenêtre temporelle élargie et à mettre en oeuvre l'accès multiple à la bande de fréquence découpée en ledit premier nombre de sous-bandes de requête d'envoi pendant la première fenêtre temporelle à nouveau élargie ;
- si le débit binaire pendant la première fenêtre temporelle est inférieur au débit binaire pendant la deuxième fenêtre temporelle, la modification du découpage de la bande de fréquence consiste à modifier le nombre de sous-bandes de requête d'envoi du deuxième nombre vers un troisième nombre, et le procédé comprend en outre la mise en oeuvre de l'accès multiple à la bande de fréquence découpée en ledit troisième nombre de sous-bandes de requête d'envoi pendant une troisième fenêtre temporelle ;
- il comprend à l'issue de la troisième fenêtre temporelle :
   ∘ une évaluation du débit binaire des données envoyées sur la bande de fréquence pendant la troisième fenêtre temporelle ;
   ∘ une comparaison du débit binaire pendant la troisième fenêtre temporelle au débit binaire pendant la deuxième fenêtre temporelle.
- si le débit binaire pendant la deuxième fenêtre temporelle est supérieur au débit binaire pendant la troisième fenêtre temporelle, la bande de fréquence est redécoupée en ledit deuxième nombre de sous-bandes de requête d'envoi, et le procédé comprend en outre les étapes consistant à élargir la deuxième fenêtre temporelle et à mettre en oeuvre l'accès multiple à la bande de fréquence découpée en ledit deuxième nombre de sous-bandes de requête d'envoi pendant la deuxième fenêtre temporelle élargie.

L'invention porte également sur un noeud destinataire d'un réseau de communication à accès multiple à une bande de fréquence d'un canal de communication avec écoute de porteuse et évitement de collision, comprenant :
- une unité de détection configurée pour détecter des messages simultanés de requête d'autorisation d'envoi de données sur le canal de communication provenant d'une pluralité de noeuds sources sur une pluralité de sous-bandes résultant du découpage de la bande de fréquence en un ensemble de sous-bandes de requête d'envoi ;
- une unité de transmission configurée pour transmettre un message d'autorisation d'envoi de données sur le canal de communication par au moins un noeud source parmi ladite pluralité de noeuds source (CTS NS0), ledit message comprenant un champ indicatif du nombre de sous-bandes dans ledit ensemble de sous-bandes de requête d'envoi.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma illustrant la variation du nombre de noeuds source au cours du temps, et la modification dynamique du nombre de sous-bandes de requête d'envoi proposée par l'invention ;
- la figure 2 est un schéma illustrant les données transitant sur les différentes sous-bandes dans un mode de réalisation possible de l'invention ;
- les figures 3 et 4 sont des schémas de machines d'état représentatives d'algorithmes pouvant être mis en oeuvre dans le cadre de l'invention pour procéder à la modification du nombre de sous-bandes de requête d'envoi.

### EXPOSÉ DÉTAILLÉ DE MODES DE RÉALISATION PARTICULIERS

D'une manière générale, l'invention repose sur l'observation que le nombre de sous-bandes de requête d'envoi, dédiées à la transmission des messages RTS par les noeuds source, joue un rôle important sur la performance globale, notamment en termes de débit.

Cette observation est tout d'abord basée sur le fait qu'il n'est pas souhaitable que le nombre de sous-bandes de requête d'envoi soit systématiquement faible. En effet, dans un réseau de communication chargé, avec par exemple de nombreux noeuds source en compétition pour l'accès à la liaison montante, la probabilité de collision augmente et il est préférable d'augmenter le nombre de sous-bandes de requête d'envoi pour réduire cette probabilité.

A contrario, il n'est pas non plus souhaitable que le nombre de sous-bandes de requête d'envoi soit systématiquement élevé. En effet, la division de la bande de fréquence en de multiples sous-bandes de requête d'envoi augmente la durée nécessaire pour transmettre un message RTS au noeud destinataire, ce qui dégrade la performance.

Dans ce cadre, l'invention propose d'adapter dynamiquement le nombre de sous-bandes de requête d'envoi en fonction de la charge du canal de communication. De telle manière, si le nombre de collisions augmente, le nombre de sous-bandes de requête d'envoi est augmenté, et a contrario, si le nombre de collisions diminue, le nombre de sous-bandes de requête d'envoi est réduit.

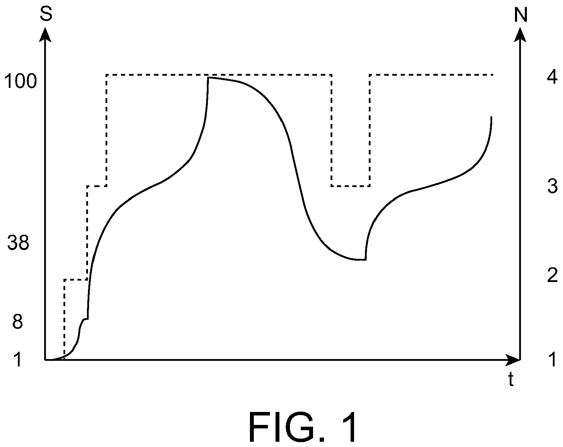

La figure 1 est un schéma illustrant ce principe sur lequel est représentée la variation du nombre S de noeuds source (en trait plein, échelle de gauche) au cours du temps t, et la modification dynamique du nombre N de sous-bandes de requête d'envoi (en trait pointillé, échelle de gauche) proposée par l'invention pour tenir compte du nombre S de noeuds source et s'adapter à la charge du canal de communication.

L'invention porte selon un premier aspect sur un procédé d'accès multiple à une bande de fréquence d'un canal de communication d'un réseau de communication, par exemple un réseau sans fil, avec écoute de porteuse et évitement de collision.

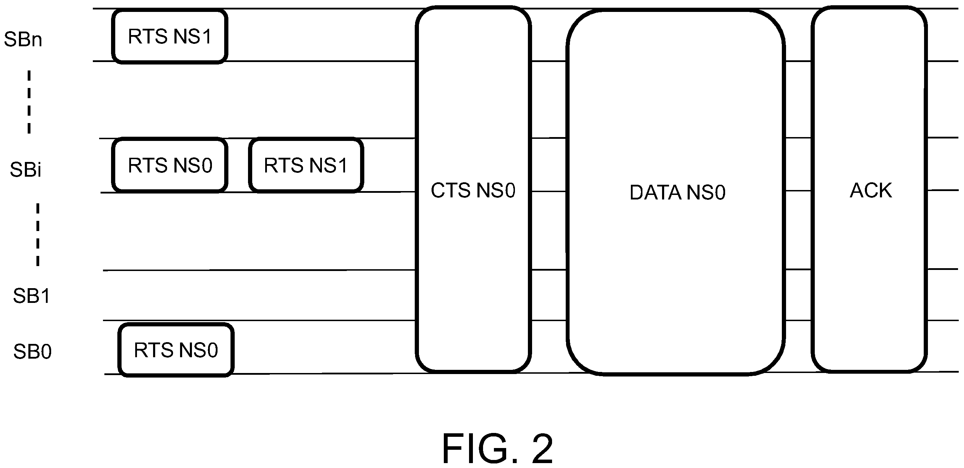

En référence à la figure 2, la bande de fréquence est découpée en un ensemble de sous-bandes de requête d'envoi SB0, SB1, ..., SBi, ..., SBn, lesdites sous-bandes de requête d'envoi étant dédiées à la transmission, par des noeuds source NS0, NS1 vers un noeud destinataire, de messages de requête d'autorisation d'envoi de données sur la bande de fréquence du canal de communication « RTS NS0 », « RTS NS1 ».

Un multiplexage en fréquence pour la transmission de messages RTS est ainsi permis, plusieurs noeuds sources pouvant transmettre simultanément de tels messages RTS sur différentes sous-bandes de requête d'envoi. Ce multiplexage en fréquence exploite par exemple la méthode d'accès OFDMA (« Orthogonal Frequency Division Multiple Access ») selon laquelle la ressource spectrale (bande de fréquence) est divisée en un ensemble de sous-porteuses orthogonales. Cet ensemble de sous-porteuses est lui-même divisé en sous-ensembles, chaque sous-ensemble de sous-porteuses constituant une sous-bande. Ce multiplexage en fréquence peut également exploiter d'autres types de modulation multi-porteuses, comme par exemple un système multi-porteuses à base de bancs de filtres FBMC (« Filter Bank based Multi-Carrier »).

Dans le cadre de l'invention, chaque noeud source dispose d'un compteur d'attente dont la valeur est modifiée (typiquement décrémentée de 1) lorsque le canal de communication dans son intégralité est détecté comme étant disponible sur une durée donnée (durée DIFS dans le cadre du protocole CSMA/CA). Le canal de communication est disponible lorsqu'aucune transmission n'a lieu sur l'ensemble des sous-bandes SB0, SB1, ..., SBi, ..., SBn du canal de communication.

Lorsque le compteur d'attente d'un noeud source atteint une valeur prédéterminée (typiquement zéro), le noeud source transmet ses données après mise en oeuvre d'un mécanisme RTS/CTS modifié.

Selon ce mécanisme RTS/CTS modifié, le procédé comprend la transmission par un noeud source, suite à la détection de la disponibilité du canal de communication, d'un ou plusieurs messages de requête d'autorisation d'envoi de données sur la bande de fréquence, chacun desdits messages étant transmis sur une ou plusieurs sous-bandes de requête d'envoi formant un sous-ensemble dudit ensemble de sous-bandes de requête d'envoi.

Ce mécanisme peut être celui décrit dans la demande EP 2 822 231 A1 selon lequel le noeud source transmet un message de requête d'autorisation d'envoi de données sur le canal de communication (message de type RTS) sur une ou plusieurs sous-bandes formant un sous-ensemble dudit ensemble de sous-bandes du canal de communication (en d'autres termes, le message n'est pas transmis sur toutes les sous-bandes).

Il peut également s'agir du mécanisme décrit dans la demande EP 2 871 903 A1 selon lequel le noeud source transmet une pluralité de messages de requête d'autorisation d'envoi de données sur le canal de communication, chacun desdits messages étant transmis sur l'une des sous-bandes de requête d'envoi. Dans ce cadre, le nombre de messages RTS transmis par un noeud source est avantageusement modifié dynamiquement en fonction de la charge du canal de communication.

Un exemple de ce deuxième mécanisme est illustré par la figure 2. Dans cet exemple, suite à la détection de la disponibilité du canal de communication, le noeud source NS0 transmet une pluralité (N=2) de messages « RTS NS0 », à savoir un message sur la sous-bande SB0 et un message sur la sous-bande SBi, et le noeud source NS1 transmet également une pluralité (N=2) de messages « RTS NS1 », à savoir un message sur la sous-bande SB1 et un message sur la sous-bande SBn.

Ce nombre N de messages de type RTS qu'un noeud source peut transmettre chacun sur l'une des sous-bandes de requête d'envoi peut avantageusement être modifié au cours du temps. De telle sorte, l'invention s'étend non seulement au cas de figure où un noeud source transmet toujours plusieurs messages de type RTS dont la quantité peut être modifiée, mais également au cas de figure où sous certaines conditions le noeud source ne transmet qu'un seul message de type RTS et où sous d'autres conditions le noeud source transmet une pluralité de messages de type RTS.

Dans ce second mécanisme, la requête d'autorisation d'envoi de données sur le canal de communication émise par un noeud source ne peut être incorrectement reçue par le noeud destinataire que si tous les N messages correspondants sont entrés en collision avec d'autres messages.

La figure 2 représente à cet égard un exemple de collision dans une sous-bande qui n'affecte pas la correcte réception par le noeud destinataire d'une requête d'autorisation d'envoi de données sur le canal de communication émise par un noeud source. Dans cet exemple, les messages « RTS NS0 » et « RTS NS1 » entrent en collision sur la sous-bande SBi. Toutefois, du fait de la diversité offerte par la transmission de plusieurs messages de type RTS sur plusieurs sous-bandes, on n'observe pas de collision sur la sous-bande Sbn, ni de collision sur la sous-bande SB0. Les messages « RTS NS0 » et « RTS NS1 », respectivement transmis sur la sous-bande SB0 et sur la sous-bande SBn, sont donc correctement reçus par le noeud destinataire.

Dans un mode de réalisation, des sous-bandes pour la transmission par un noeud source des messages RTS sont imposées, par exemple via une liste de sous-bandes dont le noeud source peut prendre connaissance.

Dans un autre mode de réalisation, le noeud source procède à une sélection de la ou des sous-bandes pour la transmission du ou des messages RTS. La sélection peut s'opérer suivant une loi de probabilité de distribution sur chacune des sous-bandes ou encore sur chacune des sous-bandes d'un sous-ensemble de l'ensemble de sous-bandes imposé au noeud source. La loi de probabilité est par exemple une loi aléatoire. Elle peut toutefois prendre une forme plus élaborée.

Dans un mode de réalisation, le nombre de messages RTS transmis par un noeud source est fonction d'un niveau de priorité associé au noeud source. Ainsi un noeud source de plus haute priorité qu'un autre noeud source transmet alors plus de messages RTS que ledit autre noeud. On comprend que le noeud source de haute priorité bénéficie alors de chances plus élevées d'une réception correcte d'un au moins de ses messages de type RTS et dès lors d'un accès plus probable au canal de communication.

Le noeud destinataire comprend une unité de détection configurée pour détecter des messages RTS simultanément transmis par une pluralité de noeuds sources sur une pluralité de sous-bandes de requête d'envoi et non entrés en collision (sur la figure 2, il s'agit des messages simultanés « RTS NS0 » et « RTS NS1 » respectivement transmis sur les sous-bandes SB0 et SBn).

Le noeud destinataire comporte par ailleurs une unité de transmission configurée pour transmettre un message type CTS d'autorisation d'envoi de données sur le canal de communication par au moins un noeud source parmi ladite pluralité de noeuds sources « CTS NS0 ». Le ou les noeuds sources autorisés à transmettre sur le canal de communication procèdent ensuite à l'envoi de leur données « DATA NS0 » sur le canal de communication, c'est-à-dire sur toutes les sous-bandes du canal de communication. Une fois une transmission de données achevée, et en cas de succès de celle-ci, le noeud destinataire envoie un message d'acquittement ACK.

Le message type CTS d'autorisation d'envoi de données sur le canal de communication par au moins un noeud source parmi ladite pluralité de noeuds sources « CTS NS0 » est également transmis sur le canal de communication, sur toutes les sous-bandes.

Selon l'invention, l'unité de détection du noeud destinataire est configurée pour écouter chacune des sous-bandes et détecter des messages simultanés de requête d'autorisation d'envoi de données provenant d'une pluralité de noeuds sources. Par messages simultanés, on entend des messages émis par des noeuds sources dans un même créneau temporel lorsque les noeuds sources et le noeud destinataire sont synchronisés, ou encore des messages émis par des noeuds sources dans une même fenêtre temporelle débutant à la disponibilité du canal de communication et prenant en considération la durée nécessaire de maintien de la disponibilité avant transmission (type DIFS) ainsi que le délai de propagation des différents noeuds sources.

En référence à la figure 2, le noeud destinataire peut ainsi détecter deux messages simultanés « RTS NS0 », « RTS NS1 » de requête d'autorisation d'envoi de données sur le canal de communication provenant de deux noeuds sources NS0, NS1 et non entrés en collision. Dans le cadre d'un protocole CSMA/CA conventionnel, les deux messages auraient été simultanément transmis sur le canal de communication où ils seraient entrés en collision, de sorte qu'aucun des deux noeuds source n'aurait pu transmettre. Dans le cadre de l'invention, le risque de collision est fortement diminué puisque les messages sont chacun transmis sur une sous-bande de requête d'envoi. Et ce risque est bien entendu d'autant plus faible que le nombre de sous-bandes est important. La probabilité de collision de messages RTS simultanés étant réduite, la performance globale du système se trouve améliorée.

Dans un mode de réalisation, le noeud destinataire réalise une sélection aléatoire d'un ou plusieurs noeuds sources parmi la pluralité de noeuds sources ayant simultanément transmis un message de requête d'autorisation d'envoi de données sur le canal de communication.

Dans un autre mode de réalisation, le noeud destinataire réalise une sélection, basée sur un niveau de priorité associé à chaque noeud source, d'un ou plusieurs noeuds sources parmi la pluralité de noeuds sources ayant simultanément transmis un message requête d'autorisation d'envoi de données sur le canal de communication (en venant par exemple sélectionner le ou les noeuds sources de plus haute priorité, de manière à leur assurer un certain niveau de qualité de service).

En référence à la figure 2, un seul noeud source NS0 est sélectionné (aléatoirement ou du fait de son niveau de priorité) et un message d'autorisation d'envoi de données sur le canal de communication par le noeud source sélectionné « CTS NS0 » est transmis sur l'ensemble du canal de communication. Après réception du message d'autorisation d'envoi de données « CTS NS0 », le noeud source sélectionné NS0 transmet ses données « DATA NS0» sur l'ensemble du canal de communication puis attend un message d'acquittement de réception « ACK » transmis par le noeud destinataire également sur l'ensemble du canal de communication.

Selon un autre mode de réalisation de l'invention, l'envoi des données d'un ensemble de noeuds sources pouvant comprendre jusqu'à m noeuds sources est planifié. Dans ce cas, le noeud destinataire peut ordonner jusqu'à m noeuds sources qui vont être capables de transmettre leurs données sans avoir à retenter la transmission avec un ou plusieurs nouveaux messages RTS. Si le nombre n de messages RTS correctement décodés au niveau du noeud destinataire est inférieur au nombre m, alors les n noeuds sources sont sélectionnés. Si au contraire le nombre n de messages RTS simultanés est supérieur à m, le noeud destinataire vient alors sélectionner m noeuds sources parmi n, soit aléatoirement, soit en fonction de leur niveau de priorité.

Le noeud destinataire transmet un message d'autorisation d'envoi de données sur le canal de communication par un ensemble de noeuds sources (ledit ensemble comprenant tout, lorsque n≤m, ou partie, lorsque n>m, des noeuds de ladite pluralité de noeuds sources) incluant un champ indicatif, pour chaque noeud source dudit ensemble, d'une transmission sur le canal de communication immédiate ou différée après écoute d'un ou plusieurs messages d'acquittement de réception transmis par le noeud destinataire sur le canal de communication.

A titre d'exemple, deux noeuds sources NS0 et NS1 peuvent être sélectionnés, et le message d'autorisation d'envoi de données sur le canal de communication par les noeuds sources sélectionnés « CTS NS0&NS1 » inclut un champ indiquant une transmission immédiate du premier noeud source NS0 et une transmission différée du second noeud source NS1 après écoute d'un message d'acquittement ACK de réception de données transmis par le noeud destinataire. Ainsi, après réception du message d'autorisation d'envoi de données « CTS NS0&NS1 », le noeud source NS0 transmet ses données « DATA NS0» sur l'ensemble du canal de communication puis attend un message d'acquittement de réception « ACK » transmis par le noeud destinataire, par exemple sur l'ensemble du canal de communication. Après écoute du message d'acquittement, le noeud source NS1 transmet ses données « DATA NS1» puis attend un message d'acquittement de réception « ACK ».

Le procédé selon l'invention est caractérisé en ce que le découpage de la bande de fréquence en une pluralité de sous-bandes de requête d'envoi n'est pas figé, mais est au contraire dynamiquement modifié en fonction de la charge du canal de communication.

Ainsi, le nombre de sous-bandes de requête d'envoi évolue au fil du temps pour augmenter lorsque la charge est élevée afin de réduire la probabilité de collision, et a contrario pour diminuer lorsque la charge est faible de manière à ne pas ralentir inutilement la transmission des messages RTS.

L'invention s'étend d'une manière générale à de multiples modifications du nombre de sous-bandes de requête d'envoi, avec au moins un passage par une stratégie multi-sous-bandes (nombre de sous-bandes au moins égal à 2) sans pour autant exclure un passage par une stratégie où le nombre de sous-bandes est égal à 1.

Le procédé selon l'invention comprend ainsi l'évaluation d'une charge du canal de communication, et, en fonction du résultat de ladite évaluation, un redécoupage de la bande de fréquence pour modifier le nombre de sous-bandes dudit ensemble de sous-bandes de requête d'envoi.

L'évaluation de la charge du canal de communication, et la décision de redécoupage de la bande de fréquence pour modifier le nombre de sous-bandes de requête d'envoi, sont plus précisément réalisées en moyen d'un algorithme d'apprentissage exploitant une estimation du débit binaire estimé par le noeud destinataire en tant que métrique représentative de la charge du canal de communication.

Le débit binaire peut être estimé par le noeud destinataire comme étant le ratio entre la durée passée en mode de réception de données (correspondant à la réception du message « DATA NSO » dans l'exemple de la figure 2) et un intervalle de temps considéré pour l'accès multiple à la bande de fréquence.

Pour commencer, un nombre de sous-bandes de requête d'envoi est fixé à un premier nombre et l'accès multiple est réalisé avec ce nombre de sous-bande de requête d'envoi pendant une première fenêtre temporelle. A l'issue de la première fenêtre temporelle, le débit binaire pendant la première fenêtre temporelle est calculé, et la bande de fréquence est redécoupée pour modifier le nombre de sous-bandes de requête d'envoi du premier nombre vers un deuxième nombre. L'accès multiple à la bande de fréquence est ensuite mis en oeuvre avec ledit deuxième nombre de sous-bandes de requête d'envoi pendant une deuxième fenêtre temporelle, qui est de préférence de durée au plus égale à celle de la première fenêtre temporelle.

A l'issue de la deuxième fenêtre temporelle, le noeud destinataire détermine le débit binaire pendant la deuxième fenêtre temporelle, et le nombre de sous-bandes est modifié ou non en fonction du résultat d'une comparaison du débit binaire pendant la première fenêtre temporelle avec le débit binaire pendant la deuxième fenêtre temporelle. Le nombre exact de sous-bandes de requête d'envoi pour l'accès multiple suivant l'issue de la deuxième fenêtre temporelle est diffusé aux noeuds sources par l'intermédiaire du message CTS.

Un exemple de décision de modification du nombre de sous-bandes de requête d'envoi est le suivant.

Si le débit binaire pendant la fenêtre temporelle est supérieur au débit binaire pendant la deuxième fenêtre temporelle, la bande de fréquence est redécoupée pour modifier le nombre de sous-bandes de requête d'envoi du deuxième nombre vers ledit premier nombre, la première fenêtre temporelle est élargie et l'accès multiple à la bande de fréquence est mis en oeuvre avec ledit premier nombre de bandes pendant la première fenêtre temporelle élargie. En d'autres termes, on ré-adopte le premier découpage puisqu'il permet d'assurer un meilleur débit, et ce pour une durée plus importante (la première fenêtre temporelle est élargie) ce qui offre notamment une estimation du débit binaire plus fiable.

A contrario, si le débit binaire pendant la première fenêtre temporelle est inférieur au débit binaire pendant la deuxième fenêtre temporelle, la bande de fréquence est redécoupée pour modifier le nombre de sous-bandes de requête d'envoi du deuxième nombre vers un troisième nombre, et l'accès multiple à la bande de fréquence est mis en oeuvre avec ledit troisième nombre pendant une troisième fenêtre temporelle. En d'autres termes, on vient procéder à une nouvelle modification du nombre de sous-bandes car le deuxième découpage assure un meilleur débit que le premier découpage et que l'on cherche alors à trouver le meilleur découpage.

Ces étapes sont ensuite réitérées à l'issue de la troisième fenêtre temporelle, en venant comparer le débit obtenu avec le troisième nombre de sous-bandes à celui obtenu avec le deuxième nombre de sous-bandes. S'il est moins bon, on ré-adopte le second nombre sur une deuxième fenêtre temporelle élargie. S'il est meilleur, on modifie le nombre de sous-bandes vers un quatrième nombre pour mettre en oeuvre l'accès multiple pendant une quatrième fenêtre temporelle. On notera qu'en prévoyant dès deuxième, troisième et quatrième fenêtres temporelles de durée au plus égale à celle de la première fenêtre temporelle (avant élargissement), le procédé permet d'être réactif à une possible modification de la charge du canal de communication.

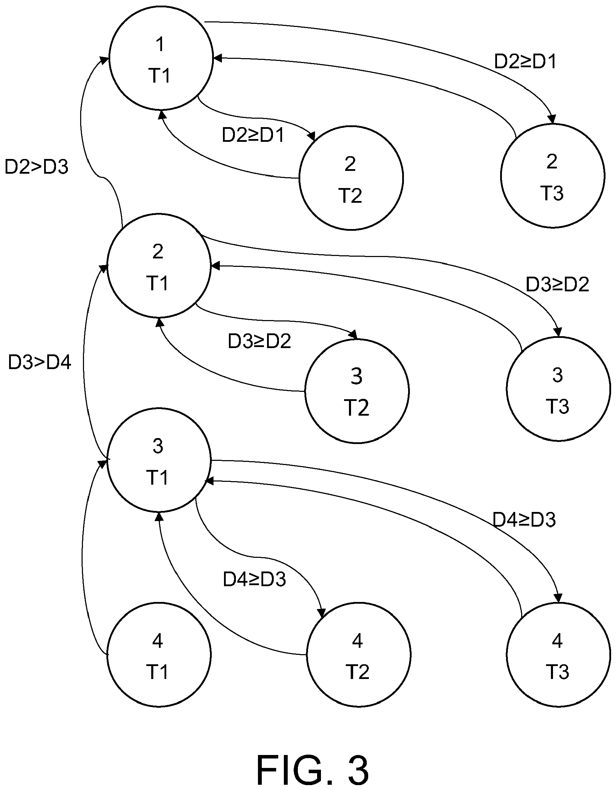

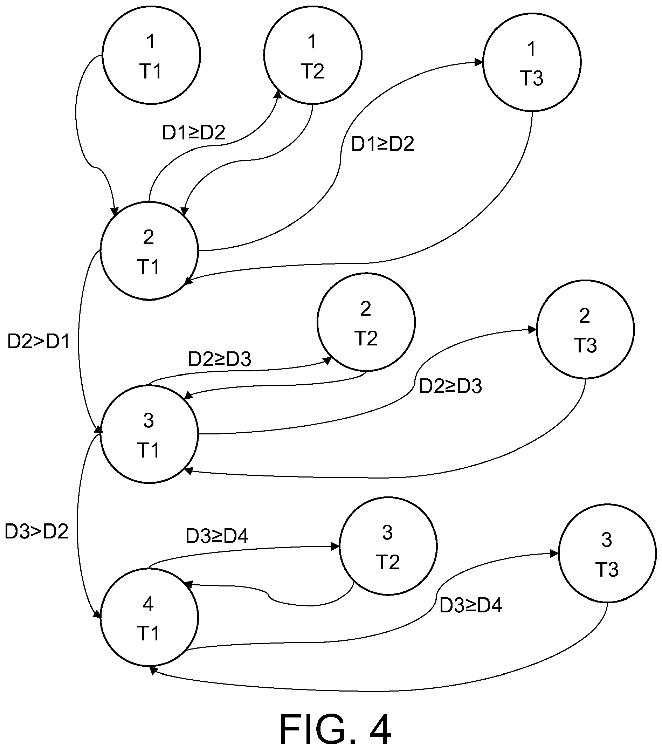

Cet algorithme est illustré par les machines d'état représentées sur les figures 3 et 4. Sur la figure 3, le nombre initial de sous-bandes est fixé à un nombre maximal (3 dans l'exemple) et la modification du nombre de sous-bandes du premier nombre vers le deuxième nombre et du deuxième nombre vers le troisième nombre consiste à diminuer le nombre de sous-bandes (décrément d'une unité dans l'exemple). Sur la figure 4, le nombre initial de sous-bandes est fixé à un nombre minimal (1 dans l'exemple) et la modification du nombre de bandes du premier nombre vers le deuxième nombre et du deuxième nombre vers le troisième nombre consiste à augmenter le nombre de sous-bandes (incrément d'une unité dans l'exemple). Sur chacune de ces figures, deux élargissements de fenêtre temporelle sont possibles pour adopter l'une parmi trois durées possibles T1, T2 et T3 avec T3>T2>T1. L'invention n'est toutefois pas limitée par ce nombre de trois, mais s'étend à un nombre n quelconque de durées possible. Sur chacune de ces figures, un cercle représente la mise en oeuvre d'un accès multiple exploitant un découpage en un nombre de sous-bandes indiqué par le chiffre en haut dans le cercle sur une durée représentée par T1, T2 ou T3 en bas dans le cercle. Enfin, sur ces figures, les points de départ et d'arrivée correspondent aux nombres maximaux et minimaux de sous-bandes. Mais l'invention n'est pas limitée à un tel cas de figure, les points de départ et d'arrivée pouvant correspondre à n'importe quelle valeur entre un nombre minimal et un nombre maximal de sous-bandes.

En référence à la figure 3, le procédé débute par un découpage en quatre bandes exploité pendant une première fenêtre temporelle de durée T1. A l'issue de T1, le débit D4 est estimé. Puis on exploite un découpage en trois bandes pendant une deuxième fenêtre temporelle de durée T1 et on évalue le débit D3 alors obtenu.

Si le débit D4 est meilleur que le débit D3, on procède à un redécoupage en quatre bandes que l'on exploite pendant une première fenêtre temporelle de durée élargie T2 pour observer un nouveau débit D4. A l'issue de cette durée élargie T2, on exploite pendant une deuxième fenêtre temporelle de durée T1 un découpage à trois bandes et on évalue à nouveau le débit D3. Si le débit D4 reste meilleur que le débit D3, on procède à un redécoupage en quatre bandes que l'on exploite pendant une première fenêtre temporelle à nouveau élargie de durée T3, etc.

Si le débit D4 est moins bon que le débit D3, on procède à un redécoupage en deux bandes que l'on exploite pendant une troisième fenêtre temporelle de durée T1. On évalue le débit D2. Si D3 est meilleur que D2, on revient exploiter un découpage en trois bandes, cette fois-ci sur une deuxième fenêtre temporelle de durée élargie T2. Si D2 est meilleur que D1, on exploite un accès multiple à une seule bande pendant une quatrième fenêtre temporelle de durée T1 et on vient ensuite comparer D1 à D2 pour décider ou non d'exploiter un découpage à deux bandes.

En référence à la figure 4, le procédé débute par un découpage en une bande exploité pendant une première fenêtre temporelle de durée T1. A l'issue de T1, le débit D1 est estimé. Puis on exploite un découpage en deux bandes pendant une deuxième fenêtre temporelle de durée T1 et on évalue le débit D2 alors obtenu.

Si le débit D1 est meilleur que le débit D2, on procède à un redécoupage en une bande que l'on exploite pendant une première fenêtre temporelle élargie de durée T2 pour observer un nouveau débit D1. A l'issue de cette durée élargie, on exploite pendant une deuxième fenêtre temporelle T1 un découpage à deux bandes et on évalue à nouveau le débit D2. Si le débit D1 reste meilleur que le débit D2, on procède à un redécoupage en une bande que l'on exploite pendant une première fenêtre temporelle à nouveau élargie de durée T3, etc.

Si le débit D1 est moins bon que le débit D2, on procède à un redécoupage en trois bandes que l'on exploite pendant une troisième fenêtre temporelle T1. On évalue le débit D3. Si D2 est meilleur que D3, on revient exploiter un découpage en deux bandes, cette fois-ci sur une deuxième fenêtre temporelle élargie de durée T2. Si D3 est meilleur que D2, on exploite un accès multiple à quatre bandes pendant une quatrième fenêtre temporelle de durée T1 et on vient ensuite comparer D3 à D4 pour décider ou non d'exploiter un découpage à trois bandes.

Les machines d'état des figures 3 et 4 peuvent être implémentées ensemble, celle de la figure 4 étant mise en oeuvre une fois que celle de la figure 3 a conduit à considérer le nombre minimal de sous-bandes et celle de la figure 3 étant mise en oeuvre une fois que celle de la figure 4 a conduit à considérer le nombre maximale de de sous-bandes.

L'invention n'est pas limitée au procédé tel que décrit précédemment, mais s'étend également à un noeud destinataire d'un réseau de communication à accès multiple à une bande de fréquence d'un canal de communication avec écoute de porteuse et évitement de collision, comprenant :
- une unité de détection configurée pour détecter des messages simultanés de requête d'autorisation d'envoi de données sur le canal de communication provenant d'une pluralité de noeuds sources sur une pluralité de sous-bandes résultant du découpage de la bande de fréquence en un ensemble de sous-bandes de requête d'envoi ;
- une unité de transmission configurée pour transmettre un message d'autorisation d'envoi de données sur le canal de communication par au moins un noeud source parmi ladite pluralité de noeuds source, ledit message comprenant un champ indicatif du nombre de sous-bandes dans ledit ensemble de sous-bandes de requête d'envoi.

Le message CTS d'autorisation d'envoi de données sur le canal de communication permet ainsi d'informer chacun des noeuds source quant au nombre sous-bandes de requête d'envoi pour la transmission des messages type RTS, cette information pouvant être complétée d'informations relatives à la sélection des sous bandes (type de loi de probabilité de distribution, limitation à un groupe de sous-bandes, etc.) et au nombre de messages RTS à transmettre.

Le noeud destinataire peut en outre comporter une unité d'évaluation configurée pour estimer une charge du canal de communication, et une unité de redécoupage configurée pour déterminer le nombre de sous-bandes de requête d'envoi devant résulter d'un découpage de la bande de fréquence en fonction de la charge estimée par l'unité d'évaluation.

L'invention porte également sur un réseau de communication à accès multiple à une bande de fréquence d'un canal de communication avec écoute de porteuse et évitement de collision, comprenant des noeuds sources et un noeud destinataire conforme à l'invention.

## Revendications

1. Procédé d'accès multiple à une bande de fréquence d'un canal de communication d'un réseau de communication avec écoute de porteuse et évitement de collision, dans lequel la bande de fréquence est découpée en un ensemble de sous-bandes de requête d'envoi (SB0, SB1, ..., SBi, ..., SBn) dédiées à la transmission, par des noeuds source vers un noeud destinataire, de messages (RST NS0, RTS NS1) de requête d'autorisation d'envoi de données sur la bande de fréquence, le procédé comprenant les étapes suivantes :
- mise en oeuvre de l'accès multiple à la bande de fréquence découpée en un premier nombre de sous-bandes de requête d'envoi pendant une première fenêtre temporelle, et évaluation du débit binaire des données envoyées sur la bande de fréquence pendant la première fenêtre temporelle,
- modification du découpage de la bande de fréquence, mise en oeuvre de l'accès multiple à la bande de fréquence découpée en un deuxième nombre de sous-bandes de requête d'envoi pendant une deuxième fenêtre temporelle, et évaluation du débit binaire des données envoyées sur la bande de fréquence pendant la deuxième fenêtre temporelle,
- comparaison du débit binaire des données envoyées sur la bande de fréquence pendant la première fenêtre temporelle au débit binaire des données envoyées sur la bande de fréquence pendant la deuxième fenêtre temporelle,
- modification du découpage de la bande de fréquence consistant à augmenter ou à diminuer le nombre de sous-bandes de requête d'envoi en fonction du résultat de la comparaison des débits binaires, ladite modification consistant à modifier le nombre de sous-bandes de requête d'envoi du deuxième nombre vers le premier nombre lorsque le débit binaire pendant la première fenêtre temporelle est supérieur au débit binaire pendant la deuxième fenêtre temporelle, et
- lorsque le débit binaire pendant la première fenêtre temporelle est supérieur au débit binaire pendant la deuxième fenêtre temporelle, les étapes consistant à élargir la première fenêtre temporelle et à mettre en oeuvre l'accès multiple à la bande de fréquence découpée en ledit premier nombre de sous-bandes de requête d'envoi pendant la première fenêtre temporelle élargie.

2. Procédé selon la revendication 1, comprenant à l'issue de la première fenêtre temporelle élargie :
- une évaluation du débit binaire des données envoyées sur la bande de fréquence pendant la première fenêtre temporelle élargie ;
- une modification du découpage de la bande de fréquence, la mise en oeuvre de l'accès multiple à la bande de fréquence découpée en ledit deuxième nombre de sous-bandes de requête d'envoi pendant une nouvelle deuxième fenêtre temporelle, et une évaluation du débit binaire des données envoyées sur la bande de fréquence pendant la nouvelle deuxième fenêtre temporelle ;
- une comparaison du débit binaire pendant la première fenêtre temporelle élargie au débit binaire pendant la nouvelle deuxième fenêtre temporelle.

3. Procédé selon la revendication 2, dans lequel si le débit binaire pendant la première fenêtre temporelle élargie est supérieur au débit binaire pendant la nouvelle deuxième fenêtre temporelle, la bande de fréquence est redécoupée en ledit premier nombre de sous-bandes de requête d'envoi, et comprenant en outre les étapes consistant à élargir à nouveau la première fenêtre temporelle élargie et à mettre en oeuvre l'accès multiple à la bande de fréquence découpée en ledit premier nombre de sous-bandes de requête d'envoi pendant la première fenêtre temporelle à nouveau élargie.

4. Procédé selon l'une des revendications 1 à 3, dans lequel si le débit binaire pendant la première fenêtre temporelle est inférieur au débit binaire pendant la deuxième fenêtre temporelle, la modification du découpage de la bande de fréquence consiste à modifier le nombre de sous-bandes de requête d'envoi du deuxième nombre vers un troisième nombre, et comprenant en outre la mise en oeuvre de l'accès multiple à la bande de fréquence découpée en ledit troisième nombre de sous-bandes de requête d'envoi pendant une troisième fenêtre temporelle.

5. Procédé selon la revendication 4, comprenant à l'issue de la troisième fenêtre temporelle :
- une évaluation du débit binaire des données envoyées sur la bande de fréquence pendant la troisième fenêtre temporelle ;
- une comparaison du débit binaire pendant la troisième fenêtre temporelle au débit binaire pendant la deuxième fenêtre temporelle.

6. Procédé selon la revendication 5, dans lequel si le débit binaire pendant la deuxième fenêtre temporelle est supérieur au débit binaire pendant la troisième fenêtre temporelle, la bande de fréquence est redécoupée en ledit deuxième nombre de sous-bandes de requête d'envoi, et comprenant en outre les étapes consistant à élargir la deuxième fenêtre temporelle et à mettre en oeuvre l'accès multiple à la bande de fréquence découpée en ledit deuxième nombre de sous-bandes de requête d'envoi pendant la deuxième fenêtre temporelle élargie.

7. Procédé selon l'une des revendications 1 à 6, comprenant à un noeud source :
- la détection de la disponibilité du canal de communication ;
- suite à la détection de la disponibilité du canal de communication, la modification d'une valeur d'un compteur d'attente ; et
- lorsque la valeur du compteur d'attente atteint une valeur prédéterminée, la transmission au noeud destinataire d'un ou plusieurs messages de requête d'autorisation d'envoi de données sur la bande de fréquence (RTS NS0, RTS NS1), chacun desdits messages étant transmis sur une ou plusieurs sous-bandes de requête d'envoi formant un sous-ensemble dudit ensemble de sous-bandes de requête d'envoi.

8. Procédé selon la revendication 7, comprenant la transmission au noeud destinataire, par le noeud source, de plusieurs messages de requête d'envoi de données sur la bande de fréquence, chacun desdits messages étant transmis sur une sous-bande de requête d'envoi.

9. Procédé selon la revendication 8, comprenant en outre, en fonction du résultat de la comparaison, une modification du nombre de messages de requête d'autorisation d'envoi de données sur la bande de fréquence transmis par le noeud source suite à la détection de la disponibilité du canal de communication.

10. Procédé selon l'une des revendications 1 à 9, comprenant au noeud destinataire :
- la détection de messages simultanés de requête d'autorisation d'envoi de données (RTS NS0, RTS NS1) sur la bande de fréquence transmis par une pluralité de noeuds source sur une pluralité de sous-bandes de requête d'envoi,
- la transmission d'un message d'autorisation d'envoi de données sur la bande de fréquence par au moins un noeud source parmi ladite pluralité de noeuds source (CTS NS0), ledit message d'autorisation d'envoi de données comprenant un champ indicatif du nombre de sous-bandes résultant du découpage de la bande de fréquences.

11. Procédé selon l'une des revendications 1 à 10, dans lequel le débit binaire des données envoyées sur la bande de fréquence pendant une fenêtre temporelle de mise en oeuvre de l'accès multiple à la bande de fréquence est évalué comme étant le ratio entre la durée passée en mode de réception de données et la durée de la fenêtre temporelle.

12. Noeud destinataire d'un réseau de communication à accès multiple à une bande de fréquence d'un canal de communication avec écoute de porteuse et évitement de collision, comprenant :
- une unité de détection configurée pour détecter des messages simultanés de requête d'autorisation d'envoi de données sur le canal de communication (RTS NS0, RTS NS1) provenant d'une pluralité de noeuds sources sur une pluralité de sous-bandes résultant d'un découpage de la bande de fréquence en un ensemble de sous-bandes de requête d'envoi ;
- une unité d'évaluation configurée pour estimer un débit binaire des données envoyées sur la bande de fréquence pendant une première fenêtre temporelle de mise en oeuvre de l'accès multiple où la bande de fréquence est découpée en un premier nombre de sous-bandes de requête d'envoi et pendant une deuxième fenêtre temporelle de mise en oeuvre de l'accès multiple où la bande de fréquence est découpée en un deuxième nombre de sous-bandes de requête d'envoi ,
- une unité de redécoupage configurée pour comparer le débit binaire des données envoyées sur la bande de fréquence pendant la première fenêtre temporelle au débit binaire des données envoyées sur la bande de fréquence pendant la deuxième fenêtre temporelle et pour augmenter ou diminuer le nombre de sous-bandes de requête d'envoi résultant du découpage de la bande de fréquence en fonction du résultat de la comparaison des débits binaires, le nombre de sous-bandes de requête d'envoi étant modifié du deuxième nombre vers le premier nombre lorsque le débit binaire pendant la première fenêtre temporelle est supérieur au débit binaire pendant la deuxième fenêtre temporelle,
- une unité de transmission configurée pour transmettre un message d'autorisation d'envoi de données sur le canal de communication par au moins un noeud source parmi ladite pluralité de noeuds source (CTS NS0), ledit message comprenant un champ indicatif du nombre de sous-bandes de requête d'envoi augmenté ou diminué, et
- lorsque le débit binaire pendant la première fenêtre temporelle est supérieur au débit binaire pendant la deuxième fenêtre temporelle, l'unité d'évaluation est en outre configurée pour estimer le débit binaire des données envoyées sur la bande de fréquence découpée en ledit premier nombre de sous-bandes de requête d'envoi pendant une fenêtre temporelle consistant en un élargissement de la première fenêtre temporelle.

13. Noeud destinataire selon la revendication 12, dans lequel le débit binaire est évalué par l'unité d'évaluation comme étant le ratio entre la durée passée en mode de réception de données et la durée de la fenêtre temporelle.

## Patentansprüche

1. Verfahren zum multiplen Zugang zu einem Frequenzband eines Kommunikationskanals eines Kommunikationsnetzwerks mit Trägerhören und Kollisionsvermeidung, wobei das Frequenzband in eine Gesamtheit von Unterbändern zur Übermittlingsanfrage (SB0, SB1, ..., SBi, ..., SBn) unterteilt ist, die der Übertragung von Nachrichten (RST NS0, RTS NS1) zur Autorisationsanfrage zur Datenübermittlung auf dem Frequenzband durch Quellenknoten an einen Zielknoten gewidmet sind, wobei das Verfahren die folgenden Schritte umfasst:
- Durchführung des multiplen Zugangs zu dem Frequenzband, das in eine erste Zahl von Unterbändern zur Übermittlungsanfrage unterteilt ist, während eines ersten Zeitfensters, und Bewertung der Binärrate der Daten, die auf dem Frequenzband während des ersten Zeitfensters übermittelt werden.
- Modifikation der Unterteilung des Frequenzbands, Durchführung des multiplen Zugangs zu dem Frequenzband, das in eine zweite Zahl von Unterbändern zur Übermittlungsanfrage unterteilt ist, während eines zweiten Zeitfensters, und Bewertung der Binärrate der Daten, die auf dem Frequenzband während des zweiten Zeitfensters übermittelt werden,
- Vergleich der Binärrate der Daten, die auf dem Frequenzband während des ersten Zeitfensters übermittelt werden, mit der Binärrate der Daten, die auf dem Frequenzband während des zweiten Zeitfensters übermittelt werden,
- Modifikation der Unterteilung des Frequenzbands, die darin besteht, die Zahl von Unterbändern zur Übermittlungsanfrage als Funktion des Ergebnisses des Vergleichs der Binärraten zu erhöhen oder zu verringern, wobei die Modifikation darin besteht, die Zahl von Unterbändern zur Übermittlungsanfrage von der zweiten Zahl zu der ersten Zahl zu modifizieren, wenn die Binärrate während des ersten Zeitfensters größer ist als die Binärrate während des zweiten Zeitfensters, und
- wobei dann, wenn die Binärrate während des ersten Zeitfensters größer ist als die Binärrate während des zweiten Zeitfensters, die Schritte darin bestehen, das erste Zeitfenster auszuweiten und den multiplen Zugang zu dem Frequenzband, das in die erste Zahl von Unterbändern zur Übermittlungsanfrage unterteilt ist, während des ausgeweiteten ersten Zeitfensters durchzuführen.

2. Verfahren nach Anspruch 1, umfassend am Ende des ausgeweiteten ersten Zeitfensters:
- eine Bewertung der Binärrate der Daten, die auf dem Frequenzband während des ausgeweiteten ersten Zeitfensters übermittelt werden;
- eine Modifikation der Unterteilung des Frequenzbands, die Durchführung des multiplen Zugangs zu dem Frequenzband, das in die zweite Zahl von Unterbändern zur Übermittlungsanfrage unterteilt ist, während eines neuen zweiten Zeitfensters, und eine Bewertung der Binärrate der Daten, die auf dem Frequenzband während des neuen zweiten Zeitfensters übermittelt werden;
- einen Vergleich der Binärrate während des ausgeweiteten ersten Zeitfensters mit der Binärrate während des neuen zweiten Zeitfensters.

3. Verfahren nach Anspruch 2, bei dem dann, wenn die Binärrate während des ausgeweiteten ersten Zeitfensters größer ist als die Binärrate während des neuen zweiten Zeitfensters, das Frequenzband wieder in die erste Zahl von Unterbändern zur Übermittlungsanfrage unterteilt wird, und ferner umfassend die Schritte, die darin bestehen, erneut das ausgeweitete erste Zeitfenster auszuweiten und den multiplen Zugang zu dem Frequenzband durchzuführen, das in die erste Zahl von Unterbändern zur Übermittlungsanfrage unterteilt ist, während des erneut ausgeweiteten ersten Zeitfensters.

4. Verfahren nach einem der Ansprüche 1 bis 3, bei dem dann, wenn die Binärrate während des ersten Zeitfensters kleiner ist als die Binärrate während des zweiten Zeitfensters, die Modifikation der Unterteilung des Frequenzbands darin besteht, die Zahl von Unterbändern zur Übermittlungsanfrage von der zweiten Zahl zu einer dritten Zahl zu modifizieren, und ferner umfassend die Durchführung des multiplen Zugangs zu dem Frequenzband, das in die dritte Zahl von Unterbändern zur Übermittlungsanfrage unterteilt ist, während eines dritten Zeitfensters.

5. Verfahren nach Anspruch 4, umfassend am Ende des dritten Zeitfensters:
- eine Bewertung der Binärrate der Daten, die auf dem Frequenzband während des dritten Zeitfensters übermittelt werden;
- einen Vergleich der Binärrate während des dritten Zeitfensters mit der Binärrate während des zweiten Zeitfensters.

6. Verfahren nach Anspruch 5, bei dem dann, wenn die Binärrate während des zweiten Zeitfensters größer ist als die Binärrate während des dritten Zeitfensters, das Frequenzband wieder in die zweite Zahl von Unterbändern zur Übermittlungsanfrage unterteilt wird, und ferner umfassend die Schritte, die darin bestehen, das zweite Zeitfenster auszuweiten und den multiplen Zugang zu dem Frequenzband durchzuführen, das in die zweite Zahl von Unterbändern zur Übermittlungsanfrage unterteilt ist, während des ausgeweiteten zweiten Zeitfensters.

7. Verfahren nach einem der Ansprüche 1 bis 6, umfassend an einem Quellenknoten:
- die Erfassung der Verfügbarkeit des Kommunikationskanals;
- im Anschluss an die Erfassung der Verfügbarkeit des Kommunikationskanals, die Modifikation eines Werts eines Wartezählers; und
- wenn der Wert des Wartezählers einen vorbestimmten Wert erreicht, die Übertragung von einer oder mehreren Nachrichten zur Autorisationsanfrage zur Datenübermittlung auf dem Frequenzband (RTS NS0, RTS NS1) an den Zielknoten, wobei jede der Nachrichten auf einem oder mehreren Unterbändern zur Übermittlungsanfrage übertragen wird, die eine Untergesamtheit der Gesamtheit von Unterbändern zur Übermittlungsanfrage bilden.

8. Verfahren nach Anspruch 7, umfassend die Übertragung, durch den Quellenknoten an den Zielknoten, von mehreren Nachrichten zur Datenübermittlungsanfrage auf dem Frequenzband, wobei jede der Nachrichten auf einem Unterband zur Übermittlungsanfrage übertragen wird.

9. Verfahren nach Anspruch 8, ferner umfassend als Funktion des Ergebnisses des Vergleichs eine Modifikation der Zahl von Nachrichten zur Autorisationsanfrage zur Datenübermittlung auf dem Frequenzband, die durch den Quellenknoten im Anschluss an die Erfassung der Verfügbarkeit des Kommunikationskanals übertragen werden.

10. Verfahren nach einem der Ansprüche 1 bis 9, umfassend am Zielknoten:
- die Erfassung von gleichzeitigen Nachrichten zur Autorisationsanfrage zur Datenübermittlung (RTS NS0, RTS NS1) auf dem Frequenzband, die durch eine Mehrzahl von Quellenknoten auf einer Mehrzahl von Unterbändern zur Übermittlungsanfrage übertragen werden,
- die Übertragung einer Nachricht zur Autorisation von Datenübermittlung auf dem Frequenzband durch wenigstens einen Quellenknoten aus der Mehrzahl von Quellenknoten (CTS NS0), wobei die Nachricht zur Autorisation von Datenübermittlung ein Feld umfasst, das die Zahl von Unterbändern angibt, die aus der Unterteilung des Frequenzbands resultieren.

11. Verfahren nach einem der Ansprüche 1 bis 10, bei dem die Binärrate der Daten, die auf dem Frequenzband während eines Zeitfensters der Durchführung des multiplen Zugangs zu dem Frequenzband übermittelt werden, bewertet wird als das Verhältnis zwischen der vergangenen Dauer im Datenempfangsmodus und der Dauer des Zeitfensters.

12. Zielknoten eines Kommunikationsnetzwerks mit multiplem Zugang zu einem Frequenzband eines Kommunikationskanals mit Trägerhören und Kollisionsvermeidung, umfassend:
- eine Erfassungseinheit, die dazu ausgelegt ist, gleichzeitige Nachrichten zur Autorisationsanfrage zur Datenübermittlung auf dem Kommunikationskanal (RTS NS0, RTS NS1) zu erfassen, die von einer Mehrzahl von Quellenknoten auf einer Mehrzahl von Unterbändern stammen, die aus einer Unterteilung des Frequenzbands in eine Gesamtheit von Unterbändern zu Übermittlungsanfrage resultieren;
- eine Bewertungseinheit, die dazu ausgelegt ist, eine Binärrate der Daten abzuschätzen, die auf dem Frequenzband während eines ersten Zeitfensters der Durchführung des multiplen Zugangs übermittelt werden, wo das Frequenzband in eine erste Zahl von Unterbändern zur Übermittlungsanfrage unterteilt ist, und während eines zweiten Zeitfensters der Durchführung des multiplen Zugangs, wo das Frequenzband in eine zweite Zahl von Unterbändern zur Übermittlungsanfrage unterteilt ist,
- eine Wiederunterteilungseinheit, die dazu ausgelegt ist, die Binärrate der Daten, die auf dem Frequenzband während des ersten Zeitfensters übermittelt werden, mit der Binärrate der Daten zu vergleichen, die auf dem Frequenzband während des zweiten Zeitfensters übermittelt werden, und die Zahl von Unterbändern zur Übermittlungsanfrage zu erhöhen oder zu verringern, die aus der Unterteilung des Frequenzbands resultieren, als Funktion des Ergebnisses des Vergleichs der Binärraten, wobei die Zahl von Unterbändern zur Übermittlungsanfrage von der zweiten Zahl zu der ersten Zahl modifiziert wird, wenn die Binärrate während des ersten Zeitfensters größer ist als die Binärrate während des zweiten Zeitfensters,
- eine Übertragungseinheit, die dazu ausgelegt ist, eine Nachricht zur Autorisation von Datenübermittlung auf dem Kommunikationskanal durch wenigstens einen Quellenknoten aus der Mehrzahl von Quellenknoten (CTS NS0) zu übertragen, wobei die Nachricht ein Feld umfasst, das die erhöhte oder verringerte Zahl von Unterbändern zur Übermittlungsanfrage angibt, und
- wobei die Bewertungseinheit ferner dazu ausgelegt ist, dann, wenn die Binärrate während des ersten Zeitfensters größer ist als die Binärrate während des zweiten Zeitfensters, die Binärrate der Daten abzuschätzen, die auf dem Frequenzband, das in die erste Zahl von Unterbändern zur Übermittlungsanfrage unterteilt ist, während eines Zeitfensters übermittelt werden, das aus einer Ausweitung des ersten Zeitfensters besteht.

13. Zielknoten nach Anspruch 12, bei dem die Binärrate durch die Bewertungseinheit als das Verhältnis zwischen der vergangenen Dauer im Datenempfangsmodus und der Dauer des Zeitfensters bewertet wird.

## Claims

1. A method for multiple access to a frequency band of a communication channel in a communication network with carrier sensing and collision avoidance, wherein the frequency band is divided into a set of request-to-send sub-bands (SB0, SB1, ..., SBi, ...SBn) dedicated to the transmission, by source nodes to a destination node, of request-to-send messages (RST NS0, RTS NS1) for communicating data on the frequency band, comprising:
- implementing the multiple access to the frequency band divided into a first number of request-to-send sub-bands during a first time window, and evaluating the bitrate of the data sent on the frequency band during the first time window,
- modifying the division of the frequency band, implementing the multiple access to the frequency band divided into a second number of request-to-send sub-bands during a second time window, and evaluating the bitrate of the data sent on the frequency band during the second time window,
- comparing the bitrate of the data sent on the frequency band during the first time window with the bitrate of the data sent on the frequency band during the second time window,
- modifying the division of the frequency band consisting in increasing or reducing the number of request-to-send sub-bands depending on the result of the bitrates comparing, said modifying consisting in modifying the number of request-to-send sub-bands from the second number to the first number when the bitrate during the first time window is greater than the bitrate during the second time window, and
- when the bitrate during the first time window is greater than the bitrate during the second time window, the steps consisting in widening the first time window and implementing the multiple access to the frequency band divided into said first number of request-to-send sub-bands during the first widened time window.

2. Method according to claim 1, comprising, at the end of the first widened time window:
- evaluating the bitrate of the data sent on the frequency band during the first widened time window;
- modifying the division of the frequency band, implementing the multiple access to the frequency band divided into said second number of request-to-send sub-bands during a new second time window, and evaluating the bitrate of the data sent on the frequency band during the new second time window;
- comparing the bitrate during the first widened time window with the bitrate during the new second time window.

3. Method according to claim 2, wherein if the bitrate during the first widened time window is greater than the bitrate during the new second time window, the frequency band is re-divided into said first number of request-to-send sub-bands, and furthermore comprising once again widening the first widened time window and of implementing the multiple access to the frequency band divided into said first number of request-to-send sub-bands during the first time window widened once more.

4. Method according to one of claims 1 to 3, wherein if the bitrate during the first time window is less than the bitrate during the second time window, modifying the division of the frequency band consists of modifying the number of request-to-send sub-bands from the second number to a third number, and furthermore comprising implementing the multiple access to the frequency band divided into said third number of request-to-send sub-bands during a third time window.

5. Method according to claim 4, comprising, at the end of the third time window, the steps of:
- evaluating the bitrate of the data sent on the frequency band during the third time window;
- comparing the bitrate during the third time window with the bitrate during the second time window.

6. Method according to claim 5, wherein if the bitrate during the second time window is greater than the bitrate during the third time window, the frequency band is re-divided into said second number of request-to-send sub-bands, the method furthermore comprising widening the second time window and of implementing the multiple access to the frequency band divided into said second number of request-to-send sub-bands during the second widened time window.

7. Method according to one of claims 1 to 6, comprising at a source node:
- detecting the availability of the communication channel;
- following detecting the availability of the communication channel, modifying a backoff counter value; and
- when the backoff counter value reaches a predetermined value, transmitting to the destination node one of more request-to-send messages (RTS NS0, STS NS1) for communicating data on the frequency band, each of said messages being transmitted on one or more request-to-send sub-bands forming a sub-set of said set of request-to-send sub-bands.

8. Method according to claim 7, comprising transmitting, to the destination node by the source node, of several request-to-send messages, each said message being sent on a request-to-send sub-band.

9. Method according to claim 8, further comprising, depending on the result of the comparison, modifying the number of request-to-send messages sent by the source node following detecting the availability of the communication channel.

10. Method according to any one of claims 1 to 9, comprising at the destination node:
- detecting simultaneous request-to-send messages (RTS NS0, RTS NS1) on the frequency channel sent by a plurality of source nodes on a plurality of request-to-send sub-bands,
- transmitting a clear-to-send message for communicating data on the frequency band by at least one source node amongst said plurality of source nodes (CTS NS0), said clear-to-send message comprising a field indicating the number of sub-bands resulting from the division of the frequency band.

11. Method according to one of claims 1 to 10, wherein the bitrate of the data sent on the frequency band during a time window for implementing the multiple access to the frequency band is evaluated as being the ratio of the time interval spent in data reception mode and the duration of the time window.

12. A destination node in a communication network with multiple access to a frequency band of a communication channel with carrier sensing and collision avoidance, comprising:
- a detection unit configured to detect simultaneous request-to-send messages for communicating data on the communication channel (RTS NS0, RTS NS1) originating from a plurality of source nodes on a plurality of sub-bands resulting from a division of the frequency band into a set of request-to-send sub-bands;
- an evaluation unit configured for estimating a bitrate of the data sent on the frequency band during a first time window for implementing the multiple access to the frequency band in which the frequency band is divided into a first number of request-to-send sub-bands and during a second time window for implementing the multiple access to the frequency band in which the frequency band is divided into a second number of request-to-send sub-bands,
- a re-division unit configured for comparing the bitrate of the data sent on the frequency band during the first time window with the bitrate of the data sent on the frequency band during the second time window and to increase or reduce the number of request-to-send sub-bands resulting from the division of the frequency band as a function of the result of the bitrates comparing, the number of request-to-send sub-bands being modified from the second number to said first number when the bitrate during the first time window is greater than the bitrate during the second time window,
- a transmission unit configured to transmit a clear-to-send message for communicating data on the communication channel by at least one source node amongst said plurality of source nodes (CTS NS0), said message comprising a field indicating the increased or reduced number of request-to-send sub-bands, and
- when the bitrate during the first time window is greater than the bitrate during the second time window, the evaluation unit is further configured to estimate the bitrate of the data sent on the frequency band divided into the first number of request-to-send sub-bands during a time window corresponding to a widening of the first time window.

13. Destination node according to claim 12, in which the bitrate is evaluated by the evaluation unit as being the ratio of time interval spent in data reception mode and duration of the time window.
